(19) Europäisches Patentamt
European Patent Office
Office européen des brevets

(11) **EP 2 343 833 B1**

(12) **EUROPEAN PATENT SPECIFICATION**

(45) Date of publication and mention
of the grant of the patent:
**31.10.2012 Bulletin 2012/44**

(51) Int Cl.:
***H04B 3/46*** (2006.01)

(21) Application number: **10305021.7**

(22) Date of filing: **08.01.2010**

(54) **Method and system for balancing the impedance in a hybrid circuit**

Methode und System für das Balancieren der Impedanz in einer Hybridschaltung

Méthode et système pour équilibrer l'impédance dans un circuit hybride

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**13.07.2011 Bulletin 2011/28**

(73) Proprietor: **Alcatel Lucent
75007 Paris (FR)**

(72) Inventors:
• **Dupuis, Nicolas**
**4051 Chaudfontaine (BE)**
• **Boets, Patrick**
**2801, Heffen (BE)**

(74) Representative: **ALU Antw Patent Attorneys
Copernicuslaan 50
2018 Antwerpen (BE)**

(56) References cited:
**GB-A- 2 137 057     US-A- 4 096 361**

## Description

Technical field

The present invention relates to an impedance balance system according to the preamble of claim 1 and a method for providing an impedance to balance a hybrid seeing a variable line impedance, in particular a hybrid connecting the transceiver of a modem with an electrical line, according to the preamble of claim 10.

Background

Offering very high bit rates over digital subscriber lines (DSL) is sensitive to channel imperfections. For example, a much higher reliability is required for the DSL transmission in order to provide quality video. Whereas high speed internet was a best effort type of service, voice and video require end-to-end quality of service. The DSL physical link is the weakest point of the chain. A factor of bit rate reduction, which is a factor affecting the quality of service, is the frequency behaviour of the input impedance of an electrical 2-wire line.

In general, the line impedance seen by the hybrid device of a transceiver is not constant, and it is known to do line impedance matching.

Prior solutions to the line impedance matching were firstly done by a resistive impedance matching, and then by optimizing the tuning of a set of passive lumped components to match the line input impedance and to reduce the return loss. Such a solution is disclosed in US 4,096,361. However, the realized impedance from an electrical circuit with a limited set of passive lumped components forms only an approximation. Moreover, the selection of the components is typically done using electromechanical relay components requiring space or using active field effect transistor switches having disturbing parasitic elements and non linear behaviour.

Summary

The object of the invention is to provide a system and method leading to improved line impedance matching.

The impedance balance system of the invention is distinguished by the features of the characterizing portion of claim 1. The impedance balance system for providing an impedance to balance a hybrid seeing a variable line impedance, said hybrid having a balance impedance port for connecting the impedance balance system, comprises:

 voltage measurement means for measuring the voltage or current at the balance impedance port;
 line determining means for determining the variable line impedance/admittance seen by the hybrid or one or more values proportional thereto;
 digital processing means for calculating a control value based on the voltage, as measured by the voltage measurement means; and the line impedance/admittance or the one or more values proportional thereto, as determined by the line determining means;
 a controllable current source to be connected at the balance impedance port, said current source being steered on the basis of the calculated control value.

According to an equivalent variant thereof the system comprises a current measurement means and a controllable voltage source.

Using such a system the bit rate of wire line communication systems can be improved. If the wire line channel shows discontinuities, the balance impedance will account for those discontinuities by its ability to be matched to any line input impedance.

The term hybrid as used in the present application refers to a system having at least four ports for separating a transmit signal from a receive signal, where the transmit and receive signal are carried on the same line. In other words, a hybrid is typically a circuit to cancel the transmit signal at the receiver port so that just the receive signal can be recovered whilst allowing the transmit signal to be applied to the line. A hybrid can be a passive or an active device. A passive device typically comprises magnetic coupled coils using one or more ferrite cores. An active construction typically comprises electrical R, L, C networks with operational amplifiers. In the latter case many hybrid topologies are possible and well known to the skilled person. A hybrid is typically a 4-port system having the property that the output of port 1 is zero if and only if port 2 is excited with a non-zero signal with any frequency content and port 3 and port 4 are terminated with a finite and non-zero impedance, and where the impedance of port 3 and port 4 do not need to be equal.

According to a preferred embodiment the control value is a current, and the controllable current or voltage source is a current controlled current or voltage source. According to a variant thereof the control value is a voltage, and the controllable current or voltage source is a voltage controlled current or voltage source.

According to a further developed embodiment the line determining means are Single Ended Line Testing (SELT) means. However, note that other techniques exist, either in the frequency domain by using the receive signal Rx and determining the ratio Rx/Tx in the digital processing means, or in the time domain by time domain equalizer (TEQ) design methods.

The voltage or current measurement means are analogue means and there is provided an analogue to digital converter between the voltage or current measurement means and the digital processing means.

The digital processing means can be e.g. a programmable or configurable digital computation device, such as a Digital Signal Processor (DSP), a Field Programmable Gate Array (FPGA) or an application specific integrated circuit (ASIC). According to a preferred embodiment the digital processing means comprise a filter coefficients calculation block for calculating filter coefficients of a digital filter based on the determined impedance/admittance or the value proportional thereto, said filter coefficients calculation block having an input connected to the line determining means, and an output; and a digital filter block having an output connected to the controllable current or voltage source, and an input connected to the output of the filter coefficients calculation block. Possible embodiments thereof will be discussed with reference to the figures. The digital filter block can e.g. be any one of the following: finite impulse response filter, infinite impulse response (IIR) filter, cascade of IIR biquads. Here it is preferred to choose a filter structure ensuring a fast computation with minimal latency.

The invention also relates to a transceiver comprising a hybrid coupled to an embodiment of a system as disclosed above, and to a modem, e.g. a CPE modem or a CO modem, comprising such a system.

The method of the invention is distinguished by the features of the characterizing portion of claim 10. The method for providing an impedance to balance a hybrid seeing a variable line impedance, said hybrid having a balance impedance port for connecting the impedance, comprises:

measuring a voltage (or a current) at the balance impedance port;
determining the variable line impedance/admittance seen by the hybrid or one or more values proportional thereto;
calculating a control value based on

- the measured voltage (or current); and
- the determined line impedance/admittance or the one or more values proportional thereto;

steering a controllable current (or voltage) source connected at the balance impedance port on the basis of the calculated control value.

According to a preferred embodiment the variable line impedance/admittance seen by the hybrid or one or more values proportional thereto is determined by SELT. Further, the control value can be calculated using a filter function H(z) having programmable filter coefficients, wherein said filter coefficients are calculated using the determined SELT values.

According to an embodiment of the invention an adaptive hybrid balance impedance is synthesized in order to balance the hybrid. The receiver of an xDSL modem with a balanced hybrid is not affected by the direct leakage of the transmit signal and the delayed reflections coming from the partial back-bouncing of the transmit signal at the impedance discontinuities of the line. The optimal balance impedance maximizes the power transfer between the line and the receiver and reduces the transmit signal interference to therefore improve the SNR at the receiver.

The accompanying drawings are used to illustrate presently preferred non-limiting exemplary embodiments of the present invention. The above and other advantages of features and objects of the invention will become more apparent and the invention will be better understood from the following detailed description when read in conjunction with the accompanying drawings in which:

Figure 1 illustrates schematically the principal structure of an adaptive hybrid;

Figure 2 shows a schematic electrical model of the line input impedances seen from the Central Office (CO) side or from the Customer Premises Equipment (CPE) side;

Figure 3 illustrates a graph of a typical line input impedance seen from the CPE side of a line containing one bridged tap (see figure 4);

Figure 4 shows a scheme of the line input impedance seen from the CPE side of a line containing one bridged tap;

Figure 5 shows a simplified scheme of a modem analogue front-end with transmit and received signals as well as leakage; and

Figure 6 illustrates schematically an embodiment of the system of the invention using a digitally controlled adaptive hybrid balance impedance.

Figure 7 illustrates schematically in more detail an embodiment of the active impedance of the invention.

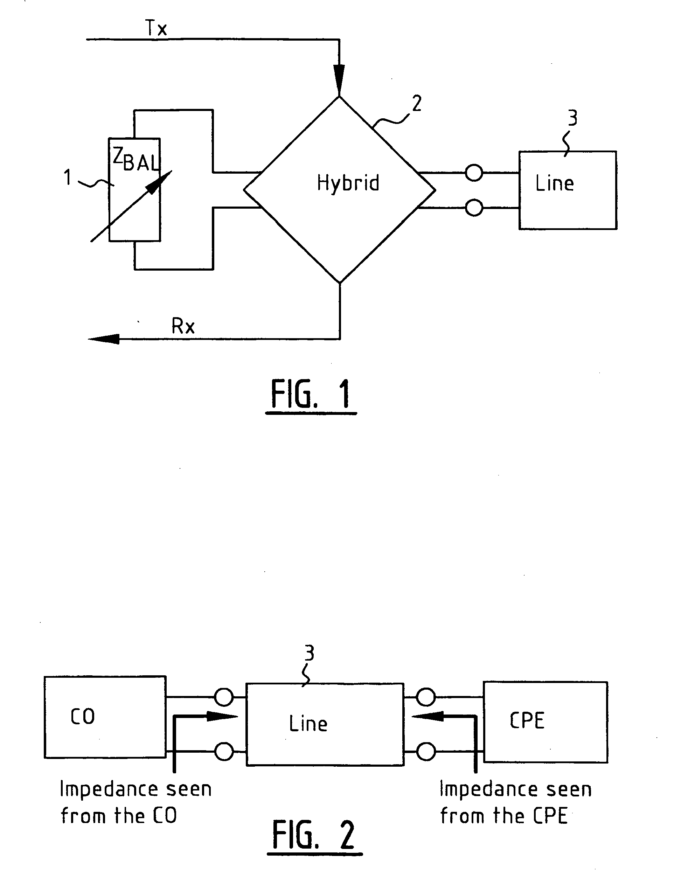

With reference to figure 1, it is noted that the line impedance seen by a hybrid device 2 of a transceiver is not constant for several reasons: the characteristic impedance of an electrical line decreases with frequency; a line 3 can be made out of multiple sections, each with different properties which will create frequency dependent reflections; parallel connected line segments, called bridged taps, will introduce frequency dependent reflective behaviour such as spectral notches.

This non-constant frequency behaviour makes the impedance matching with the modem front-end difficult and therefore introduces return loss which results into the signal-to-noise ratio (SNR) degradation. In this description return loss can be viewed as the ratio of the received signal caused by the transmit signal of the same transceiver, and the transmit signal of the transceiver.

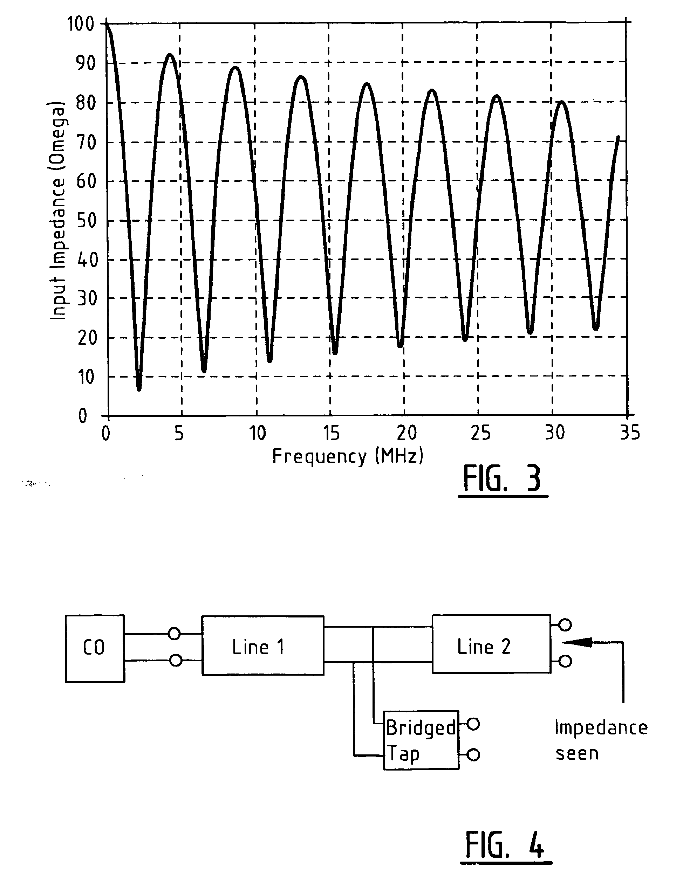

In the presence of a complex line topology, for example containing bridged taps, as shown in Figure 4, the impedance seen from the central office (CO) or customer premises equipment (CPE) side, is not constant in the frequency band of the broadband modem. In fact, the magnitude and phase of the input impedance have a variable behaviour depending on the frequency, containing for example notches. This is shown in Figure 3. To transmit as much power as possible from the line to the CPE and to avoid hybrid power leakage between the transmit port and the receiver port of the hybrid device, as shown in Figure 1, the hybrid balance impedance has to match the input impedance of the line seen by the line port of the hybrid device.

Best previous solutions proposed to match the line input impedance by using electrical circuits with tuneable passive lumped components as hybrid balance impedance 1. Such solutions were sufficiently performing for straight line topologies which cause weak reflections at the line junctions. However, lines used for broadband DSL modems have many possible line make-ups and each line section belongs to a set of different line types. As a result, the balance circuits cannot match any kind of line input impedance and therefore cannot avoid completely return loss and hybrid leakage. These last mentioned hybrid impairments degenerate the DSL performance.

One of the ideas of the invention is to digitally synthesize an adaptive active balance impedance 1 to match the line input impedance in order to bring the hybrid into balance. This reduces the return loss observed by the receiver between the line and the modem hybrid and leakage through the hybrid itself to therefore increase the signal-to-noise ratio.

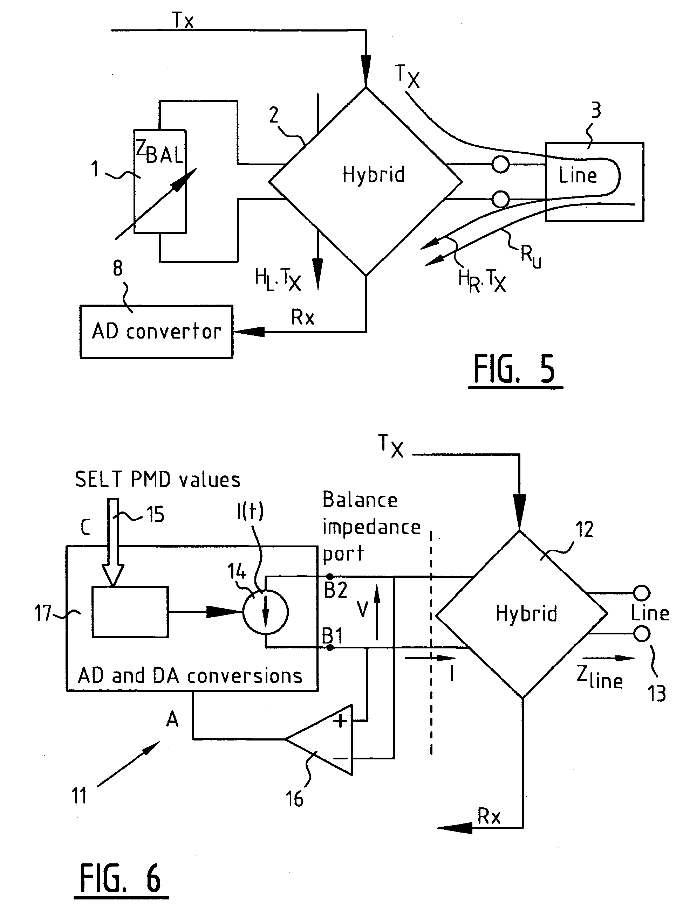

In order to better understand the invention, first the received signal of a near-end receiver will be analyzed with reference to figure 5. The received signal comprises a number of signal contributions and typically can be decomposed as follows:

$$R_X = R_U + H_L.T_X + H_R.T_X$$

with

$R_U$ the received signal transmitted by the far-end transmitter;
$H_L$ the frequency response function of the hybrid leakage;
$H_R$ the frequency response function that quantifies the reflections caused by the line when it is excited with the near-end transmit signal; and
$T_X$ the transmitted signal of the near-end transceiver.

If the hybrid 2 is in perfect balance by using the correct balance impedance then $H_L = 0$ and $H_R = 0$ and $R_X = R_U$ which means that the received signal is completely determined by the communication signal transmitted by the far-end transceiver. If the hybrid 2 is not in balance, then the received signal coming from the far-end is corrupted with the hybrid leakage signal $H_L.T_X$ and the delayed reflections $H_R.T_X$ of the near-end transmit signal. This unbalance will reduce the effective dynamic range of the analogue-to-digital (AD) converter 8 of the near-end receiver. This typically results in a decreased signal-to-noise ratio and finally in a reduced bit rate.

Now an embodiment of the system of the invention will be illustrated with reference to figure 6. One of the principles of this embodiment is the use of an active impedance 11 which is synthesized by monitoring the voltage V at the balance side of the hybrid 12 and next to digitally drive a current source 14. The impedance seen from the hybrid when looking into the balance circuit is the balance impedance $Z_{BAL}$. This impedance $Z_{BAL}$ is the ratio of the voltage V divided by the current I flowing through the balance impedance port.

This voltage-current relation is digitally computed and programmed and an as such an active and frequency dependent adaptive impedance is synthesized. The voltage V is measured by a voltage measurement means 16, converted into digital signals and fed into a digital computation device 17. The calculation of the optimal balance impedance requires the knowledge of the line impedance $Z_{line}$ as seen by the hybrid 12. Where the hybrid 12 is part of a DSL modem, the frequency dependent line impedance can for instance be measured using the SELT (Single Ended Line Testing) capability of the DSL modem. In the digital domain, the measured SELT Uncalibrated Echo Response measurement will provide the information H(z) to calculate the current source I(z) when the voltage V(z) is known according to I(z) = H(z).V(z) and z represents the Z-transform frequency variable. In the illustrated embodiment the real-time processing to obtain the control information for the current source 14 is carried out by the programmable or configurable digital computation device 17 such as a digital signal processor (DSP) or a Field Programmable Gate Array (FPGA).

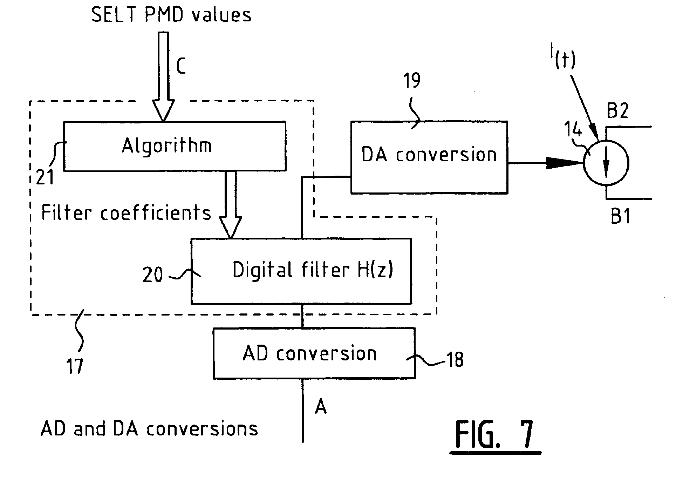

The active impedance 11 will now be further detailed with reference to figure 7. The measured voltage at the balance impedance port in the analogue domain first enters an analogue-to-digital converter 18 via port A. In the A/D converter 18 it is transformed into a digital representation. Next, the digital signal is filtered in the digital domain using a digital filter 20 with a filter function H(z) where z is the z-transform operator. The digital filtered signal enters a digital-to-analogue converter 19.

The digital filter 20 has programmable filter coefficients. These coefficients are typically obtained using an algorithm 21 which finds the optimal filter coefficients in a single step procedure or using an iterative procedure. The digital filter 20 can have a hard-coded or programmable structure. Examples are a finite impulse response (FIR) filter or an infinite impulse response (IIR) filter. According to possible embodiments either the filter order can be hard-coded, or the maximum filter order can be hard-coded, or the filter order can be made programmable. Preferably the filter structure should be selected such that computation is fast and is carried out with minimal latency. Examples of a suitable filter structure comprise cascaded bi-quads IIR filters as disclosed in an article by K. Van Renterghem et al, entitled "A Reconfigurable Digital Platform for the Real-time Emulation of Broadband Copper Access Networks", IEEE Transactions on Instrumentation and Measurement, Vol. 56, Nr. 6, December 6, 2007, pp. 2731-2738.

According to a preferred embodiment the AD converter, the digital filter and the DA converter technologies are chosen such that the latency between the input A and the current output B1/B2 is minimal. Minimal latency is advantageous to emulate the frequency dependent phase of the balance impedance as close as possible to the desired phase. The analogue output of the DA converter 19 drives the current source 14. This source can e.g. be a voltage controlled current source or a current controlled current source.

Single-ended line testing (SELT) is an elementary function provided on all ADSL/ADSL2/ADSL2+ and VDSL2 modems from the central office (CO) side. Further, at present it is also envisaged to implement this feature in a CPE modem. SELT typically works as follows: the transmitter sends out, typically periodically, a discrete multi-tone signal with a known spectral content. This signal propagates on the line and each time there is an impedance discontinuity, a reflection is created which propagates back to the transmitter. In other words a SELT measurement represents an uncalibrated echo measurement. The uncalibrated echo response is the SELT measurement. It is a relative quantity comparable with return loss which is typically calculated by dividing the measured received signal (containing the echo's) divided by the known transmitted signal in the frequency domain. Each of those SELT measurements uses known but different balance impedances. These balance impedances are created using a known set of filter coefficients. The use of the different SELT-measurements and the knowledge of the SELT calibration allow the in-situ calibration of the hybrid device. The SELT calibration is an a priori known data set. It is typically measured using 3 uncalibrated echo response measurements where for each measurement the line port is terminated with a known load and the balance impedance is fixed, but with a known value which implies that the filter coefficients are known. In the case of a DSL model with SELT, the SELT analysis typically has to be launched during the initialization and can be launched again afterwards to track possible variations of the line input impedance.

There are many possibilities to calculate the above described filter function H(z). The calculation of the filter coefficients is carried out using an algorithm that can work in the time domain or in frequency domain. The most evident method is to work in the frequency domain because the SELT measurement typically delivers the echo response in the frequency domain. The calculation of H(z) is typically a digital-filter coefficients calculation. Many algorithms are known to the skilled person in this domain depending on the filter structure and filter order. According to a preferred embodiment, where the invention is used in a modem with the SELT functionality, the digital filter coefficients are typically computed only once when the modem initializes.

For certain other applications SELT may not be available. H(z) could then be determined either in the frequency domain by using the receive signal Rx and determining the ratio Rx/Tx in the programmable device. This implies that one must know the frequency content of the Tx signal which could e.g. be known through a priori knowledge of the transmit circuit and the per construction known frequency content of the transmit signal source. In the time domain (e.g. when there is no FFT available) one could fall back to time domain equalizer (TEQ) design methods.

If the transmit signal is fixed in magnitude and phase for all SELT measurements the ration Rx/Tx can be replaced by Rx. The latter is justified because a SELT measurement represents an uncalibrated echo response and the value of Tx in the ratio Rx/Tx represents a constant scaling.

Further, a constraint to perform as well as possible the matching is to optimize the time-frequency processing of the current-voltage relation. This means that the different frequency components of the voltage signal are preferably estimated fast to weight and compute their current response in the time-domain. Therefore an optimized time-frequency algorithm and fast digital signal processing are advantageous.

Embodiments of the invention will improve the bit rate of wire line communication systems. Typically, if the wire line channel shows discontinuities at the junctions of multiple cable segments and when bridged taps are present, the balance impedance will account for those discontinuities. This will also be possible when the hybrid cannot be balanced using a passive or active lumped circuit with a limited number of tuneable components. One of the advantages of the solution provided by embodiments of the invention is its ability to match the hybrid image impedance to any line input impedance. This is useful for lines containing bridged taps, cascaded line sections or in general lines which exhibit any kind of impedance which cannot be easily matched with a lumped electrical circuit. The impedance matching to bring the hybrid into balance is typically important to optimize the power transfer between two media as well as the separation between the received and transmitted signals. This lowers the experienced return loss and the hybrid leakage. In a modem, it optimizes the AD converter effective dynamic range and therefore lowers the analogue-to-digital quantification noise with respect to the useful received signal component. Finally, the modem can achieve a higher bit rate with an optimized balance impedance.

The skilled person will understand that the invention is widely applicable and that the invention can be used for instance in central office equipment (such as DSL CO modems), remote cabinet equipment or customer premises equipment (such as CPE modems). However, the invention is not limited to those applications, and the invention may also be used in e.g. measurement equipment such as in a reflectometer, i.e. a device that measures the voltage reflectogram of a line) which could also benefit from a well balanced hybrid.

While the principles of the invention have been set out above in connection with specific embodiments, it is to be clearly understood that this description is merely made by way of example and not as limitation of the scope of protection which is determined by the appended claims. E.g., the skilled person knows that it is equally well possible to measure the current and digitally drive a voltage source instead of measuring a voltage and driving a current source.

## Claims

1. Impedance balance system for providing an impedance to balance a hybrid (12) seeing a variable line impedance, said hybrid having a balance impedance port for connecting the impedance balance system, comprising:

   voltage or current measurement means (16) for measuring the voltage or current at the balance impedance port,
   respectively; wherein the voltage or current measurement means are analogue means;
   line determining means for determining the variable line impedance/admittance seen by the hybrid or one or more values proportional thereto; **characterized in that** the system further comprises:

   an analogue to digital converter (18) to obtain a digital representation of the voltage or current as measured by the voltage or current measurement means, respectively;
   digital processing means (17) for calculating a control value based on

   - the digital representation of the voltage or current; and
   - the line impedance/admittance or the one or more values proportional thereto, as determined by the line determining means;

   a digital to analogue converter (19) for converting the calculated control value in an analogue drive signal;
   a controllable current or voltage source (14) to be connected at the balance impedance port, said current or
   voltage source being steered on the basis of the analogue drive signal.

2. System of claim 1, wherein the control value is a current, and the controllable current or voltage source is a current controlled current or voltage source, or
wherein the control value is a voltage, and the controllable current or voltage source is a voltage controlled current or voltage source.

3. System of claim 1, wherein the line determining means are Single Ended Line Testing (SELT) means.

4. System of claim 1, wherein the digital processing means are a Digital Signal Processor (DSP), a Field Programmable Gate Array (FPGA), or an application specific integrated circuit (ASIC).

5. System of claim 1, wherein the line determining means are adapted to determine the line impedance/admittance or the value proportional thereto at initialization of the system and/or at consecutive moments in time.

6. System of claim 1, wherein the digital processing means comprise:

   - a filter coefficients calculation block (21) for calculating filter coefficients of a digital filter based on the determined impedance/admittance or the value proportional thereto, said filter coefficients calculation block having an input connected to the line determining means, and an output;
   - a digital filter block (20) having an output connected to the controllable current or voltage source, and an input connected to the output of the filter coefficients calculation block.

7. System of claim 6, wherein the digital filter block is any one of the following: finite impulse response filter, infinite impulse response (IIR) filter, cascade of IIR biquads.

8. Transceiver comprising a hybrid coupled to a system of any of the previous claims.

9. Modem comprising a system according to any of the claims 1-7.

10. Method for providing an impedance to balance a hybrid (12) seeing a variable line impedance, said hybrid having a balance impedance port for connecting the impedance, comprising:

    measuring a voltage or a current at the balance impedance port, respectively;
    determining the variable line impedance/admittance seen by the hybrid or one or more values proportional thereto;

**characterized in that** the method further comprises converting said measured voltage or current in a digital representation of said voltage or current;

calculating a control value based on

- the digital representation of the measured voltage or current, respectively; and
- the determined line impedance/admittance or the one

or more values proportional thereto;

converting said control value in an analogue drive signal;

steering a controllable current or voltage source connected at the balance impedance port on the basis of analogue drive signal, respectively.

11. Method of claim 10, wherein the variable line impedance/admittance seen by the hybrid or one or more values proportional thereto are determined by SELT.

12. Method of claim 11, wherein the control value is calculated using a filter function H(z) having programmable filter coefficients, and wherein said filter coefficients are calculated using the determined SELT values.

13. Method of claim 10, performed in a modem, wherein the determining is done at initialization time of the modem.

**Patentansprüche**

1. System für das Balancieren der Impedanz, um eine Impedanz für das Balancieren einer Hybridschaltung (12), welche eine variable Leitungsimpedanz erkennt, bereitzustellen, wobei die besagte Hybridschaltung einen Balance-Impedanz-Port für den Anschluss des Systems zum Balancieren der Impedanz aufweist, umfassend:

Spannungs- oder Strommessmittel (16) zum Messen der Spannung bzw. des Stroms am Balance-Impedanz-Port, wobei die Spannungs- oder Strommessmittel analoge Mittel sind;
Leitungsermittlungsmittel zum Ermitteln der variablen Leitungsimpedanz/-admittanz, wie sie von der Hybridschaltung erkannt wird, oder eines oder mehrerer zu dieser proportionalen Werte(s); **dadurch gekennzeichnet, dass** das System weiterhin umfasst:

Einen Analog-Digital-Wandler (18) zum Erhalten einer digitalen Darstellung der Spannung oder des Stroms, wie sie von den Spannungs- bzw. Strommessmitteln gemessen wurden;
digitale Verarbeitungsmittel (17) zum Berechnen eines Steuerwerts auf der Basis

- der digitalen Darstellung der Spannung oder des Stroms; und
- der Leitungsimpedanz/-admittanz oder eines oder mehrerer zu dieser proportionalen Werte(s), wie von den Leitungsermittlungsmittel ermittelt;

einen Digital-Analog-Wandler (19) zum Umwandeln des berechneten Steuerwerts in ein analoges Ansteuersignal;
eine steuerbare Strom- oder Spannungsquelle (14) für den Anschluss an den Balance-Impedanz-Port, wobei die besagte Strom- oder Spannungsquelle auf der Basis des analogen Ansteuersignals gesteuert wird.

2. System nach Anspruch 1, wobei der Steuerwert ein Strom und die steuerbare Strom- oder Spannungsquelle eine stromgesteuerte Strom- oder Spannungsquelle ist, oder wobei der Steuerwert eine Spannung und die steuerbare Strom- oder Spannungsquelle eine spannungsgesteuerte Strom- oder Spannungsquelle ist.

3. System nach Anspruch 1, wobei die Leitungsermittlungsmittel einendige Leitungsprüf- bzw. SELT-Mittel sind.

4. System nach Anspruch 1, wobei die digitalen Verarbeitungsmittel ein digitaler Signalprozessor (DSP), ein feldprogrammierbares Gate-Array (FPGA) oder eine anwendungsspezifische integrierte Schaltung (ASIC) sind.

5. System nach Anspruch 1, wobei die Leitungsermittlungsmittel dazu ausgelegt sind, die Leitungsimpedanz/-admittanz oder den zu dieser proportionalen Wert bei der Initialisierung des Systems und/oder zu aufeinanderfolgenden Zeitpunkten zu ermitteln.

6. System nach Anspruch 1, wobei die digitalen Verarbeitungsmittel umfassen:

- Einen Filterkoeffizienten-Berechnungsblock (21) zum Berechnen der Filterkoeffizienten eines digitalen Filters auf der Basis der ermittelten Impedanz/Admittanz oder des zu dieser proportionalen Wertes, wobei der besagte Filterkoeffizienten-Berechnungsblock einen an das Leitungsermittlungsmittel angeschlossenen Eingang und einen Ausgang aufweist;
- einen digitalen Filterblock (20) mit einem an die steuerbare Strom- oder Spannungsquelle angeschlossenen Ausgang und einem an den Ausgang des Filterkoeffizienten-Berechnungsblocks angeschlossenen Eingang.

7. System nach Anspruch 6, wobei der digitale Filterblock beliebig entweder ein Filter mit endlicher Impulsantwort, ein Filter mit unendlicher Impulsantwort (IIR) oder eine IIR Biquad-Kaskade ist.

8. Transceiver, umfassend eine an ein System gemäß einem beliebigen der vorstehenden Ansprüche gekoppelte Hybridschaltung.

9. Modem, umfassend ein System gemäß einem beliebigen der Ansprüche 1-7.

10. Verfahren zum Bereitstellen einer Impedanz für das Balancieren einer Hybridschaltung (12), welche eine variable Leitungsimpedanz erkennt, wobei die besagte Hybridschaltung einen Balance-Impedanz-Port für den Anschluss der Impedanz aufweist, umfassend:

Messen einer Spannung bzw. eines Stroms am Balance-Impedanz-Port;
Ermitteln der variablen Leitungsimpedanz/-admittanz, wie sie von der Hybridschaltung erkannt wird, oder eines oder mehrerer zu dieser proportionalen Werte(s);
**dadurch gekennzeichnet, dass** das Verfahren weiterhin umfasst:

Umwandeln der besagten gemessenen Spannung oder des besagten gemessenen Stroms in eine digitale Darstellung der besagten Spannung oder des besagten Stroms;
Berechnen eines Steuerwerts auf der Basis

- der digitalen Darstellung der gemessenen Spannung oder des gemessenen Stroms; und
- der ermittelten Leitungsimpedanz/-admittanz oder des einen oder der mehreren zu dieser proportionalen Werte(s);

Umwandeln des besagten Steuerwerts in ein analoges Ansteuersignal;
Steuern einer an den Balance-Impedanz-Port angeschlossenen steuerbaren Strom- bzw. Spannungsquelle auf der Basis des analogen Ansteuersignals.

11. Verfahren nach Anspruch 10, wobei die von der Hybridschaltung erkannte variable Leitungsimpedanz/-admittanz oder ein oder mehrere zu dieser proportionale(r) Wert(e) anhand der SELT ermittelt werden.

12. Verfahren nach Anspruch 11, wobei der Steuerwert unter Verwendung einer Filterfunktion H(z) mit programmierbaren Filterkoeffizienten berechnet wird, und wobei die besagten Filterkoeffizienten unter Verwendung der ermittelten SELT-Werte berechnet werden.

13. Verfahren nach Anspruch 10, durchgeführt in einem Modem, wobei das Ermitteln zum Zeitpunkt der Initialisierung des Modems erfolgt.

**Revendications**

1. Système d'équilibre d'impédance pour fournir une impédance afin d'équilibrer un dispositif hybride (12) percevant une impédance de ligne variable, ledit dispositif hybride présentant un port d'impédance d'équilibre pour connecter le système d'équilibre d'impédance, comprenant :

moyens de mesure de la tension ou du courant (16) pour mesurer la tension ou le courant au niveau du port d'impédance d'équilibre, respectivement ; dans lequel les moyens de mesure de la tension ou du courant sont des moyens analogiques ;
moyens de détermination de ligne pour déterminer l'impédance/admittance de ligne variable perçue par le dispositif hybride ou une ou plusieurs valeurs proportionnelles à celle-ci ; **caractérisé en ce que** le système comprend en outre :

un convertisseur analogique/numérique (18) pour obtenir une représentation numérique de la tension ou du courant tel que mesuré par les moyens de mesure de la tension ou du courant, respectivement ;
moyens de traitement numérique (17) pour calculer une valeur de commande en se basant sur

- la représentation numérique de la tension ou du courant ; et
- l'impédance/admittance de ligne ou la ou les valeurs proportionnelles à celle-ci, comme cela est déterminé par les moyens de détermination de ligne ;

un convertisseur numérique/analogique (19) pour convertir la valeur de commande calculée en un signal de commande analogique ;
une source de courant ou de tension contrôlable (14) à connecter au niveau du port d'impédance d'équilibre, ladite source de courant ou de tension étant orientée sur la base du signal de commande analogique.

**2.** Système selon la revendication 1, dans lequel la valeur de commande est un courant, et la source de courant ou de tension contrôlable est une source de courant ou de tension commandée par un courant, ou dans lequel la valeur de commande est une tension, et la source de courant ou de tension contrôlable est une source de courant ou de tension commandée par une tension.

**3.** Système selon la revendication 1, dans lequel les moyens de détermination de ligne sont des moyens de vérification d'une ligne asymétrique (SELT).

**4.** Système selon la revendication 1, dans lequel les moyens de traitement numérique sont un processeur de signal numérique (DSP), un réseau prédiffusé programmable par l'utilisateur (FPGA) ou un circuit intégré spécifique à l'application (ASIC).

**5.** Système selon la revendication 1, dans lequel les moyens de détermination de ligne sont adaptés pour déterminer l'impédance/admittance de ligne ou la valeur proportionnelle à celle-ci au moment de l'initialisation du système et/ou à des instants consécutifs dans le temps.

**6.** Système selon la revendication 1, dans lequel les moyens de traitement numérique comprennent :

- une unité de calcul de coefficients de filtre (21) pour calculer des coefficients de filtre d'un filtre numérique en se basant sur l'impédance/admittance déterminée ou sur la valeur proportionnelle à celle-ci, ladite unité de calcul de coefficients de filtre présentant une entrée connectée aux moyens de détermination de ligne, et une sortie ;
- une unité de filtrage numérique (20) présentant une sortie connectée à la source de courant ou de tension contrôlable, et une entrée connectée à la sortie de l'unité de calcul de coefficients de filtre.

**7.** Système selon la revendication 6, dans lequel l'unité de filtrage numérique est l'un quelconque des éléments suivants : un filtre à réponse impulsionnelle finie, un filtre à réponse impulsionnelle infinie (IIR), une cascade de biquads IIR.

**8.** Émetteur-récepteur comprenant un dispositif hybride couplé à un système selon l'une quelconque des revendications précédentes.

**9.** Modem comprenant un système selon l'une quelconque des revendications 1-7.

**10.** Procédé pour fournir une impédance afin d'équilibrer un dispositif hybride (12) percevant une impédance de ligne variable, ledit dispositif hybride présentant un port d'impédance d'équilibre pour connecter l'impédance, comprenant les étapes suivantes :

mesurer une tension ou un courant au niveau du port d'impédance d'équilibre, respectivement ;
déterminer l'impédance/admittance de ligne variable perçue par le dispositif hybride ou une ou plusieurs valeurs proportionnelles à celle-ci ;
**caractérisé en ce que** le procédé comprend en outre les étapes suivantes
convertir ladite tension ou ledit courant mesuré en une représentation numérique de ladite tension ou dudit courant ;
calculer une valeur de commande en se basant sur

- la représentation numérique de la tension ou du courant mesuré, respectivement ; et
- l'impédance/admittance de ligne déterminée ou la ou les valeurs proportionnelles à celle-ci ;

convertir ladite valeur de commande en un signal de commande analogique ;
orienter une source de courant ou de tension contrôlable connectée au niveau du port d'impédance d'équilibre sur la base d'un signal de commande analogique, respectivement.

**11.** Procédé selon la revendication 10, dans lequel l'impédance/admittance de ligne variable perçue par le dispositif hybride ou une ou plusieurs valeurs proportionnelles à celle-ci sont déterminées par SELT.

**12.** Procédé selon la revendication 11, dans lequel la valeur de commande est calculée en utilisant une fonction de filtre H(z) présentant des coefficients de filtre programmables, et dans lequel lesdits coefficients de filtre sont calculés en utilisant les valeurs SELT déterminées.

**13.** Procédé selon la revendication 10, exécuté dans un modem, dans lequel la détermination est réalisée au moment de l'initialisation du modem.

FIG. 1

Impedance seen
from the CO

FIG. 2

Impedance seen
from the CPE

FIG. 3

FIG. 4

## FIG. 5

## FIG. 6

SELT PMD values

C

19

Algorithm

21

Filter coefficients

20 — Digital filter H(z)

DA conversion

$^I(t)$

B2

14

B1

AD conversion

18

A

AD and DA conversions

FIG. 7

**EP 2 343 833 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4096361 A

**Non-patent literature cited in the description**

- **K. VAN RENTERGHEM et al.** A Reconfigurable Digital Platform for the Real-time Emulation of Broadband Copper Access Networks. *IEEE Transactions on Instrumentation and Measurement,* 06 December 2007, vol. 56 (6), 2731-2738

**14**